# EUROPÄISCHE PATENTANMELDUNG

(11) **EP 4 722 975 A1**
(43) Veröffentlichungstag der Anmeldung: **08.04.2026**
(21) Anmeldenummer: 25204727.9
(22) Anmeldetag: 25.09.2025
(51) Int. Cl.: G06K 7/10, G06K 7/14, G06K 19/06

(54) **VERFAHREN UND VORRICHTUNG ZUR OPTISCHEN ERFASSUNG MINDESTENS EINES CODES**

(30) Priorität: 01.10.2024 DE 102024209629
(71) Anmelder: Pepperl+Fuchs SE, 68307 Mannheim (DE)
(72) Erfinder: Theis, Christoph, 68307 Mannheim (DE)
(74) Vertreter: Ullrich & Naumann PartG mbB

(57) **Zusammenfassung**

Ein Verfahren zur optischen Erfassung mindestens eines Codes (1), wobei der mindestens eine Code (1) mittels eines optischen Sensors (2) zur Erzeugung eines entsprechenden Detektionssignals (3) zumindest teilweise erfasst wird und wobei das Detektionssignal (3) zur Auswertung des mindestens einen Codes (1) einem Decoder (4) zugeführt wird, ist im Hinblick auf eine besonders zuverlässige und zeitsparende Auswertung des mindestens einen Codes (1) mit konstruktiv einfachen Mitteln derart ausgestaltet und weitergebildet, dass eine Bewertung einer Qualität einer Auswertung des mindestens einen Codes (1) anhand mindestens eines im Decoder (4) bereitgestellten Parameterwerts (5) durchgeführt wird. Des Weiteren ist eine entsprechende Vorrichtung zur optischen Erfassung mindestens eines Codes (1) angegeben.

## Beschreibung

Die Erfindung betrifft ein Verfahren zur optischen Erfassung mindestens eines Codes, wobei der mindestens eine Code mittels eines optischen Sensors zur Erzeugung eines entsprechenden Detektionssignals zumindest teilweise erfasst wird und wobei das Detektionssignal zur Auswertung des mindestens einen Codes einem Decoder zugeführt wird.

Des Weiteren betrifft die Erfindung eine Vorrichtung zur optischen Erfassung mindestens eines Codes, umfassend einen optischen Sensor sowie einen Decoder, wobei der mindestens eine Code mittels des optischen Sensors zur Erzeugung eines entsprechenden Detektionssignals zumindest teilweise erfassbar ist und wobei das Detektionssignal zur Auswertung des mindestens einen Codes dem Decoder zuführbar ist.

Verfahren und Vorrichtungen der eingangs genannten Art sind aus der Praxis bekannt. Beispielsweise sind aus der EP 3 399 379 B1 ein Verfahren und eine Vorrichtung zur optischen Erfassung mindestens eines Codes in Form eines Barcodes 10 bekannt. Dabei wird der Code von einem optischen Sensor 6 erfasst. Am optischen Sensor 6 anstehende Signale werden einem Decoder in Form einer Auswerteeinheit zugeführt.

Derartige Verfahren und Vorrichtungen werden beispielsweise bei Positioniereinrichtung verwendet, bei denen die Position eines sich relativ zu einer Umgebung bewegenden Fahrzeugs bestimmt wird. Dabei können Codes entlang einer Bewegungsstrecke eines Fahrzeugs positioniert sein, wobei der optische Sensor dem Fahrzeug zugeordnet ist. Die Zuverlässigkeit einer hier durchgeführten Positionsbestimmung über derartige Codes hängt von der visuell erfassbaren Qualität der Codes oder eines Codebandes inkl. einer Szene, bei der beispielsweise beurteilt wird, ob ein Bild eines Codes gut oder schlecht ist und/oder ob ein Code möglicherweise nur teilweise sichtbar ist, und dem technischen Zustand einer entsprechenden Vorrichtung ab. Um einen stabilen Betrieb zu gewährleisten wird nach Industrie 4.0 üblicherweise eine Vorausfallbeurteilung durchgeführt. Dabei wird beispielsweise beurteilt, ob ein Kontrast oder eine Intensität unter einem bestimmten Mindestwert liegt, falls beispielsweise eine Beleuchtung zu schwach oder defekt ist. Zur Generierung werden hierfür Berechnungen durchgeführt, die einen zeitlichen Mehrbedarf bedeuten. Zeit ist bei derartigen Verfahren und Vorrichtungen ein kritischer Faktor.

In der ISO-Norm ISO/IEC 15415 werden Kriterien zur Bestimmung einer Qualität eines Codes in Form eines DataMatrix-Codes beschrieben. Die wesentlichen Kriterien bewerten den Druck solcher Codes im Hinblick auf Intensität und Kontrast. In Grenzen sind Kriterien abgedeckt, die das Zusammenspiel zwischen Gerät und Code, wie Beleuchtungshomogenität oder -intensität beschreiben. Nicht abbildbar sind Kriterien, die durch die technische Umsetzung der Positionsbestimmung vorgegeben werden. Dazu gehört insbesondere das Zeitverhalten, welches maßgeblich durch einen gewählten Zeittakt begrenzt und durch technische Suchalgorithmen vorgegeben ist. Ein Zeittakt bedeutet beispielsweise, dass mittels des Sensors oder einer Kamera des Sensors alle 10 ms ein neues Bild aufgenommen wird, wobei beispielsweise 7 Codes gleichzeitig aufgenommen werden. Dabei versucht der Decoder so viele Codes, wie im Bild vorhanden sind, zu lesen, um die Dekodierung durchzuführen. Ein Suchalgorithmus muss beispielsweise die Aufgabe lösen, einen Code an seinem Rand oder an seiner Ecke auszuwerten und/oder Abbruchbedingungen bei Ausleseproblemen zu berücksichtigen.

Des Weiteren basieren bisherige Methoden auf zusätzlichen Berechnungen und benötigen somit viel Zeit, die meist nur knapp bemessen ist, und somit fehlt. Beispielsweise muss bei der ISO-Norm ISO/IEC 15415 eine Quiet zone in Form eines weißen Bereichs mit einer Modulbreite komplett außen um den Code herum vorhanden sein, wobei die Prüfung dieser Quiet zone Zeit kostet.

Bei dem aus der oben erwähnten EP 3 399 379 B1 Verfahren und bei der hieraus bekannten Vorrichtung wird das Bild des Codes und damit die Qualität der Realisierung des Codes bestimmt. Danach erfolgt - je nach Ergebnis der Qualitätsbestimmung - eine Dekodierung des Codes mittels des Decoders. Hier erfolgt also eine Bestimmung der Qualität der Erfassung der Codes, wobei eine Qualitätskennzahl aus mehreren Grundgrößen gebildet wird, wobei die Grundgröße Beurteilungskriterien für den erfassten Code und/oder für die Aufnahmebedingungen der Bilderfassung mit dem optischen Sensor 6 bilden. Die Grundgröße erfasst eine Form einer Objektgeometriestruktur, einen Vergrößerungsfaktor einer Objektgeometriestruktur, einen Kontrast eines Codes, eine Lage eines erfassten Codes innerhalb eines Erfassungsbereichs einer Kamera 8 des optischen Sensors 6 und/oder das Bildrauschen oder die Bildhelligkeit eines Bilds des Codes. Dieser gesamte Vorgang der Qualitätsbestimmung erfolgt im optischen Sensor selbst.

Hierbei ergibt sich das Problem, dass die Realisierung des Codes eine optisch und nach klassischen Ansätzen gute Qualität haben, der Decoder ihn jedoch dennoch nicht lesen kann. Umgekehrt kann der Code eine optisch und nach klassischen Ansätzen her schlechte Qualität aufweisen, jedoch dennoch gut für den Decoder zu lesen sein. Folglich kann die bekannte Form der Qualitätsbewertung zu nicht sinnvollen Ergebnissen führen, wodurch sich eine Unzuverlässigkeit ergibt.

Der vorliegenden Erfindung liegt daher die Aufgabe zugrunde, ein Verfahren und eine Vorrichtung zur optischen Erfassung mindestens eines Codes anzugeben, wonach eine besonders zuverlässige und zeitsparende Auswertung des mindestens einen Codes mit konstruktiv einfachen Mitteln ermöglicht ist.

Erfindungsgemäß wird die voranstehende Aufgabe durch ein Verfahren mit den Merkmalen des Anspruchs 1 sowie durch eine Vorrichtung mit den Merkmalen des Anspruchs 15.

Danach ist das Verfahren zur optischen Erfassung mindestens eines Codes gemäß Anspruch 1 derart ausgestaltet und weitergebildet, dass eine Bewertung einer Qualität einer Auswertung des mindestens einen Codes anhand mindestens eines im Decoder bereitgestellten Parameterwerts durchgeführt wird.

Des Weiteren ist die Vorrichtung zur optischen Erfassung mindestens eines Codes gemäß Anspruch 15 derart ausgestaltet und weitergebildet, dass eine Bewertung einer Qualität einer Auswertung des mindestens einen Codes anhand mindestens eines im Decoder bereitgestellten Parameterwerts durchführbar ist.

In erfindungsgemäßer Weise ist erkannt worden, dass durch eine Abkehr von der bisher durchgeführten Qualitätsbewertung, bei der durch den optischen Sensor aufgenommene Parameter genutzt werden, die voranstehende Aufgabe auf überraschend einfache Weise gelöst wird. In weiter erfindungsgemäßer Weise erfolgt die Bewertung einer Qualität einer Auswertung des mindestens einen Codes stattdessen anhand mindestens eines im Decoder bereitgestellten Parameterwerts, der ein Zustandswert sein kann oder einen Zustandswert aufweisen kann. Dabei wird diese Qualitätsbewertung auf eine Weise durchgeführt, die quasi ohne einen zeitlichen Mehrbedarf umgesetzt werden kann, wie er in herkömmlicher Weise bei einer Analyse mittels des optischen Sensors aufgenommener Bilder des Codes auftritt. Bei der Erfindung bestimmt der Decoder selbst die Qualität und entscheidet selbst, ob eine Dekodierung möglich ist oder ob die Bedingungen hierfür zu schlecht sind. Da die Qualitätsbewertung anhand mindestens eines in Decoder bereitgestellten Parameterwerts durchgeführt wird, bildet die Qualitätsbewertung somit in direkter Weise den Zustand des Decoders ab. Letztendlich wird hierbei berücksichtigt, dass der Decoder und nicht der optische Sensor grundsätzlich vorgibt, wie gut die Vorrichtung ist. Daher ist es von großem Vorteil, wenn die Qualitätsbewertung vom Decoder oder genauer gesagt von einem im Decoder bereitgestellten Parameterwert abgeleitet wird. Hierbei gibt ein momentaner Zustand des Decoders die Qualität wieder, die auf den jeweiligen Decoder abgestimmt ist. Der Decoder gibt somit quasi mit seinen Fähigkeiten die Möglichkeiten vor - und damit auch die Maßstäbe zur Qualitätsbewertung. Im Ergebnis ergibt sich aufgrund dieser besonders aussagekräftigen Qualitätsbewertung eine besonders zuverlässige Auswertung des mindestens einen Codes, wobei in zeitsparender Weise keine zusätzliche Analyse von mittels des optischen Sensors aufgenommenen Bildern eines Codes erforderlich ist.

Folglich sind mit dem erfindungsgemäßen Verfahren und der erfindungsgemäßen Vorrichtung zur optischen Erfassung mindestens eines Codes ein Verfahren und eine Vorrichtung bereitgestellt, wonach eine besonders zuverlässige und zeitsparende Auswertung des mindestens einen Codes mit konstruktiv einfachen Mitteln ermöglicht ist.

In besonders einfacher Weise kann Bewertung im und/oder durch den Decoder durchgeführt werden. Eine zusätzliche, außerhalb des Decoders angeordnete Einrichtung zur Auswertung eines im Decoder bereitgestellten Parameterwerts, beispielsweise eine zusätzliche Recheneinrichtung, die zusätzlichen Platz benötigt, ist hierbei nicht erforderlich.

In besonders zeitsparender Weise kann der mindestens eine Parameterwert bei einem Vorgang des Decodierens bereitgestellt werden. Dies kann beispielsweise ein Parameterwert sein, der während eines üblichen Vorgang des Decodierens auch ohne den Vorgang der Qualitätsbewertung erzeugt wird oder erzeugt werden muss. Der für die Bewertung der Qualität genutzte Parameterwert muss also nicht zusätzlich, in einem vom Decodieren eines Codes unabhängigen Vorgang bereitgestellt werden.

Bei einem konkreten Ausführungsbeispiel kann der mindestens eine Parameterwert durch die Algorithmik des Decoders erzeugt oder bereitgestellt werden oder sich aus der Algorithmik des Decoders ergeben. Hierbei orientiert sich die Qualitätsbewertung also an der Algorithmik des Decoders und nicht anhand eines vorgegebenen Maßstabs der Szene.

Der mindestens eine Parameterwert kann in flexibler Weise, je nach konkretem Erfordernis und Anwendungsfall ganz unterschiedlich ausgewählt werden. Bei einem konkreten Ausführungsbeispiel kann der mindestens eine Parameterwert einen Zeitbedarf für ein Erfassen oder Lesen eines Codes, einen Kontrast in einem Code, eine Fehlerkorrektur innerhalb eines Codes, eine Position eines Codes in einem mittels des optischen Sensors aufgenommenen Bilds, eine Größe eines Codes in einem mittels des optischen Sensors aufgenommenen Bilds und/oder eine Anzahl mittels des optischen Sensors gefundener Codes - gegebenenfalls innerhalb einer definierbaren Zeitdauer - umfassen. Dabei ist die Auswahl des mindestens einen Parameterwert nicht statisch, sondern kann je nach Erfordernis und Anwendungsfall auf unterschiedlichste Art und Weise erweitert oder beschränkt werden.

Im Hinblick auf eine besonders zuverlässige Qualitätsbewertung und damit Auswertung des mindestens einen Codes können ein oder mehrere Parameterwerte einer statistischen Bearbeitung oder Betrachtung unterzogen werden. Hierdurch ergibt sich eine besonders hohe Aussagekraft der Qualitätsbewertung und Abbildung der im Decoder vorliegenden Situation und der sich hieraus ergebenden Leistung des Decoders.

Bei einem weiteren konkreten Ausführungsbeispiel kann als Ergebnis der Bewertung mindestens ein Qualitätswert erzeugt werden, wobei der mindestens eine Qualitätswert jeweils für einen Parameterwert oder für mehrere Parameterwerte gemeinsam erzeugt werden kann. Ein derartiger Qualitätswert kann in einfacher Weise beispielsweise ein Zahlenwert sein.

Hinsichtlich einer besonders zuverlässigen Auswertung des mindestens einen Codes kann der mindestens eine Qualitätswert mit einem mit dem Qualitätswert in Verbindung stehenden, definierbaren Schwellwert verglichen werden, wobei der Schwellwert veränderbar sein kann. Hierdurch kann eine einfache Einstufung der Leistungsfähigkeit des Decoders vorgenommen werden. Die optionale Veränderbarkeit des Schwellwerts ermöglicht ein hohes Maß an Flexibilität, wobei je nach benötigter Geschwindigkeit, der oder die Schwellwerte oder Bewertungsschwellen der entsprechenden Qualitätswerte oder die Mindest-Anzahl der decodierten Codes pro Zeiteinheit angepasst werden können.

Bei einem weiteren konkreten Ausführungsbeispiel kann die Auswertung bei einem Unterschreiten des Schwellwerts durch den mindestens einen Qualitätswert als nicht ausreichend qualifiziert werden. Hierdurch kann erreicht werden, dass eine Auswertung nur bei einem definierbaren Qualitätsniveau und damit Sicherheitsniveau stattfindet.

In konstruktiv besonders einfacher Weise kann der Decoder dem Sensor zugeordnet oder in den Sensor integriert ist. Hierbei lässt sich ein kombiniertes Bauteil aus Sensor und Decoder realisieren, dass üblicherweise sehr wenig Platz benötigt.

Hinsichtlich einer konkreten Ausführungsform kann der mindestens eine Code ein 1D oder 2D Code, insbesondere ein Barcode, Data-Matrixcode oder QR-Code sein. Derartige Codes haben sich in der Praxis als besonders tauglich und hinsichtlich des gestaltbaren Informationsgehalts als besonders vielfältig gezeigt. Je nach Anwendungsfall kann entschieden werden, welcher Typ des Codes in geeigneter Weise zum Einsatz kommt.

Im Hinblick auf eine besonders einfach handhabbare Anordnung des mindestens einen Codes kann der mindestens eine Code oder können mehrere Codes Bestandteil eines Code-Tags, Codestreifens oder Codebands sein.

Bei einem konkreten und industriell bedeutsamen Ausführungsbeispiel kann der Sensor einem Transportsystem oder Fahrzeug zugeordnet und/oder an einem Transportsystem oder Fahrzeug angeordnet sein. Es sind jedoch auch andere Anwendungsfälle für das erfindungsgemäße Verfahren und die erfindungsgemäße Vorrichtung denkbar.

Dabei kann in weiter konkreter Weise der mindestens eine Code im Bereich einer Bewegungsstrecke eines Transportsystems oder Fahrzeugs angeordnet sein. Insoweit können der mindestens eine Code und der optische Sensor für eine Relativbewegung zueinander genutzt werden. Im konkreten Fall kann eine Relativbewegung zwischen einem Transportsystem oder Fahrzeug und dem mindestens einen Code vorliegen.

Ausführungsbeispiele des erfindungsgemäßen Verfahrens und der erfindungsgemäßen Vorrichtung zur optischen Erfassung mindestens eines Codes können in vorteilhafter Weise die folgenden Merkmale aufweisen:
- Eine Lesbarkeit/Performance leitet sich direkt von der algorithmischen Leistungsfähigkeit der Erkennung ab, beispielsweise eines DataMatrix-Decoders.
- Schwächen im Algorithmus schränken direkt eine zuverlässige Erkennung ein.
- Aus dem Stand der Technik bekannte Analysen außerhalb der Algorithmen der Erkennung kosten Rechenzeit - diese "stehlen" dem eigentlichen Erkennungsalgorithmus Zeit, wodurch dieser wieder in seiner Leitungsfähigkeit beschränkt wird und als Folge die Lesbarkeit sinkt.
- Bei Ausführungsbeispielen kann eine Statistik mehrerer Größen oder Parameterwerte im Decoder erzeugt werden, wobei die Einzelwerte nicht erzeugt werden müssen, da sie Bestandteil des Decoders sind, wodurch sie den "inneren Zustand" des Decoders beschreiben.
- Diese Größen oder Parameterwerte korrelieren direkt mit der Fähigkeit, Codes in Form von beispielsweise DataMatrix-Codes zuverlässig/In-Time zu decodieren.
- Diese Größen oder Parameterwerte sind z.B. Zeit für eine Auswertung des ersten Codes, Kontrast einer Codeabbildung, eine vorgenommene Fehlerkorrektur, eine Anzahl gefundener Codes (je mehr Codes, desto höher ist eine Redundanz!), eine Position des Codes im Bild oder eine Größe des Codes im Bild. Beliebige andere interne Zustände oder Größen oder Parameterwerte sind auch denkbar.

Als besondere Vorteile von Ausführungsbeispielen im Vergleich mit dem Stand der Technik ergeben sich:
- Vergleichbarkeit von Lesbarkeit/Performance und Qualität.
- Qualitätserzeugung ohne Zeitbedarf, da innere Zustände/Statistiken/Ergebnisse verwendet werden.
- Bewertung der gesamten "Szene".
- Verbesserungen in der Erkennung bewirken automatisch eine Adaption der Qualität.

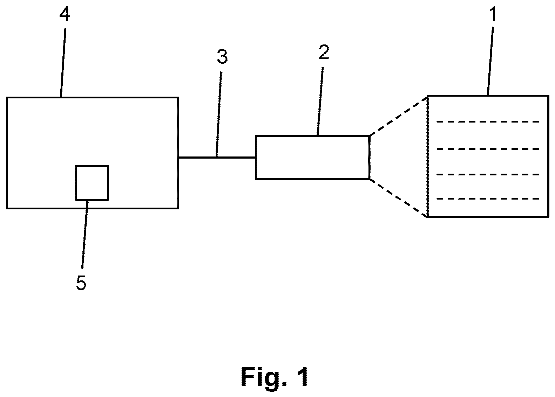

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele des erfindungsgemäßen Verfahrens sowie der erfindungsgemäßen Vorrichtung anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigt
- Fig. 1: in einer schematischen Darstellung ein Ausführungsbeispiel der erfindungsgemäßen Vorrichtung.

In Fig. 1 ist in einer schematischen Darstellung ein Ausführungsbeispiel einer erfindungsgemäßen Vorrichtung zur optischen Erfassung eines Codes 1 gezeigt. Diese Vorrichtung ist zur Durchführung des erfindungsgemäßen Verfahrens geeignet.

Bei einer aus dem Stand der Technik bekannten Vorrichtung wird vor der Dekodierung das Bild des Codes 1 auf verschiedene Parameter, beispielsweise Intensität, Kontrast etc., analysiert, was zeitaufwändig ist. Daraus wird anhand von Kriterien bestimmt, ob der Code/die Codes 1 auslesbar sind und entsprechend die Dekodierung durchgeführt oder auch nicht. Hieraus ergibt sich zum einen das Problem, dass je zeitaufwändiger die Bildanalyse ist, desto weniger Codes 1 pro Zeiteinheit ausgewertet werden können und umso langsamer beispielsweise ein Positioniersystem wird, das mit der Vorrichtung betrieben wird. Ein weiteres Problem ergibt sich dadurch, dass trotz guter Kriterien, die Dekodierung fehlschlagen kann, wenn - wie oben bereits erwähnt - beispielsweise ein schwarzer Punkt in der Quiet Zone vorliegt.

Bei dem in Fig. 1 gezeigten Ausführungsbeispiel hingegen wird der mindestens eine Code 1 mittels eines optischen Sensors 2 zur Erzeugung eines entsprechenden Detektionssignals 3 erfasst und wird das Detektionssignale 3 zur Auswertung des mindestens einen Codes 1 einem Decoder 4 zugeführt, worauf nun erst eine Bewertung einer Qualität einer Auswertung des mindestens einen Codes 1 durchgeführt wird und zwar anhand mindestens eines im Decoder 4 bereitgestellten Parameterwerts 5.

Die Bewertung einer Qualität der Auswertung erfolgt also im oder durch den Decoder 4, wodurch die Auslesbarkeit/Qualität der Codes 1 direkt im Decoder 4 bestimmt wird, und zwar beim Decodiervorgang.

Es findet also im Gegensatz zum Stand der Technik keine vorherige Bildauswertung statt, wodurch Zeit gespart wird. Bildfehler, welche bei einer solchen vorherigen Bildauswertung aufgefunden werden, werden bei dem voranstehend beschriebenen Ausführungsbeispiel indirekt während des Dekodiervorgangs entdeckt.

Die Methode der Codeauswertung - das Decodieren eines Codes 1 mittels des Decoders 4 - kann gemäß Ausführungsbeispielen der Erfindung durch statistisch vorhandene Parameterwerte 5, Merkmale oder Kriterien ergänzt werden, die nebenläufig mit erzeugt werden oder bereits vorhanden sind und keinen oder zumindest keinen signifikanten zeitlichen Mehrbedarf bei der Codeauswertung verursachen. Diese Parameterwerte 5, Merkmale oder Kriterien sind beispielsweise:
a) Zeitbedarf pro Codelesung (Zeitstempel auslesen)
b) Kontrast (Helligkeitsunterschied von hellen und dunklen Modulen im Code 1)
c) Fehlerkorrektur im Code 1 (Teil des Decoders 4)
d) Anzahl gefundener Codes 1
e) Position des Codes 1 im Bild
f) Größe des Codes 1 im Bild

Dabei ist die Auswahl dieser Parameterwerte 5, Merkmale oder Kriterien nicht statisch, sondern kann beliebig beschränkt oder erweitert werden. Kritische Pfade, die zu einem Ausfall des Verfahrens und damit der Auswertung eines Codes 1 führen können, werden beispielsweise wie folgt abgedeckt:
1) Verschmutzungen schlagen sich durch Verschlechterung aller Kriterien nieder.
2) Probleme der Beleuchtung machen sich primär durch Kriterium b) bemerkbar.
3) Bildverarbeitungsprobleme, wie sie sich z.B. durch eine stark gestörte Szene bemerkbar machen, schlagen sich hauptsächlich im Kriterium a) und somit auch im Kriterium d) nieder.
4) Läuft ein Codeband mit Codes 1 aus dem durch den optischen Sensor 2 aufgenommenen Bild, sinkt die Anzahl an Codes 1, was sich auf das Kriterium d) auswirkt.

Speziell die Zeitmessung stellt hierbei ein wichtiges Kriterium dar, da hiermit das beschränkte Zeitverhalten der Vorrichtung mit in die Bewertung einfließt. Wird die Dekodierung für die technische Umsetzung schwieriger, schlägt sich dies in einem zeitlichen Mehrbedarf nieder, wobei die Anzahl der decodierten Codes 1 sinkt. Durch Festlegung von einer oder mehreren Schwellwerten oder Bewertungsschwellen der einzelnen Parameterwerte 5 oder Kriterien kann eine Absenkung der Qualitätsbewertung oder des Qualitätsniveaus veranlasst werden.

Insbesondere lässt sich mit Ausführungsbeispielen der vorliegenden Erfindung erreichen, dass kein oder kein signifikanter zeitlicher Mehrbedarf in Bezug auf Berechnungen zur Bestimmung der Qualität erforderlich ist. Indirekt erfolgt auch eine Berücksichtigung der Druckqualität eines Codes 1.

Des Weiteren kann bei Ausführungsbeispielen der vorliegenden Erfindung eine Berücksichtigung des algorithmischen Zeitverhaltens und/oder des Geräte-, Positions- und/oder Systemzustandes erfolgen. Ausführungsbeispiele des erfindungsgemäßen Verfahrens können adaptiv sein, da Änderungen am Decoder 4 direkte Auswirkungen auf die Parameterwerte 5 haben können und somit nicht angepasst werden müssen.

Hinsichtlich weiterer vorteilhafter Ausgestaltungen des erfindungsgemäßen Verfahrens sowie der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Code
- 2: Sensor
- 3: Detektionssignal
- 4: Decoder
- 5: Parameterwert

## Patentansprüche

1. Verfahren zur optischen Erfassung mindestens eines Codes (1), wobei der mindestens eine Code (1) mittels eines optischen Sensors (2) zur Erzeugung eines entsprechenden Detektionssignals (3) zumindest teilweise erfasst wird und wobei das Detektionssignal (3) zur Auswertung des mindestens einen Codes (1) einem Decoder (4) zugeführt wird,
**dadurch gekennzeichnet, dass** eine Bewertung einer Qualität einer Auswertung des mindestens einen Codes (1) anhand mindestens eines im Decoder (4) bereitgestellten Parameterwerts (5) durchgeführt wird.

2. Verfahren nach Anspruch 1, **dadurch gekennzeichnet, dass** die Bewertung im und/oder durch den Decoder (4) durchgeführt wird.

3. Verfahren nach Anspruch 1 oder 2, **dadurch gekennzeichnet, dass** der mindestens eine Parameterwert (5) bei einem Vorgang des Decodierens bereitgestellt wird.

4. Verfahren nach einem der Ansprüche 1 bis 3, **dadurch gekennzeichnet, dass** der mindestens eine Parameterwert (5) durch die Algorithmik des Decoders (4) erzeugt oder bereitgestellt wird oder sich aus der Algorithmik des Decoders (4) ergibt.

5. Verfahren nach einem der Ansprüche 1 bis 4, **dadurch gekennzeichnet, dass** der mindestens eine Parameterwert (5) einen Zeitbedarf für ein Erfassen oder Lesen eines Codes (1), einen Kontrast in einem Code (1), eine Fehlerkorrektur innerhalb eines Codes (1), eine Position des Codes (1) in einem mittels des optischen Sensors aufgenommenen Bilds, eine Größe des Codes (1) in einem mittels des optischen Sensors aufgenommenen Bilds und/oder eine Anzahl mittels des optischen Sensors (2) gefundener Codes (1) - gegebenenfalls innerhalb einer definierbaren Zeitdauer - umfasst.

6. Verfahren nach einem der Ansprüche 1 bis 5, **dadurch gekennzeichnet, dass** ein oder mehrere Parameterwerte (5) einer statistischen Bearbeitung oder Betrachtung unterzogen werden.

7. Verfahren nach einem der Ansprüche 1 bis 6, **dadurch gekennzeichnet, dass** als Ergebnis der Bewertung mindestens ein Qualitätswert erzeugt wird, wobei der mindestens eine Qualitätswert jeweils für einen Parameterwert (5) oder für mehrere Parameterwerte (5) gemeinsam erzeugt werden kann.

8. Verfahren nach Anspruch 7, **dadurch gekennzeichnet, dass** der mindestens eine Qualitätswert mit einem mit dem Qualitätswert in Verbindung stehenden, definierbaren Schwellwert verglichen wird, wobei der Schwellwert veränderbar sein kann.

9. Verfahren nach Anspruch 8, **dadurch gekennzeichnet, dass** die Auswertung bei einem Unterschreiten des Schwellwerts durch den mindestens einen Qualitätswert als nicht ausreichend qualifiziert wird.

10. Verfahren nach einem der Ansprüche 1 bis 9, **dadurch gekennzeichnet, dass** der Decoder (4) dem Sensor (2) zugeordnet oder in den Sensor (2) integriert ist.

11. Verfahren nach einem der Ansprüche 1 bis 10, **dadurch gekennzeichnet, dass** der mindestens eine Code (1) ein 1D oder 2D Code, insbesondere ein Barcode, Data-Matrixcode oder QR-Code ist.

12. Verfahren nach einem der Ansprüche 1 bis 11, **dadurch gekennzeichnet, dass** der mindestens eine Code (1) oder mehrere Codes (1) Bestandteil eines Code-Tags, Codestreifens oder Codebands sind.

13. Verfahren nach einem der Ansprüche 1 bis 12, **dadurch gekennzeichnet, dass** der Sensor (2) einem Transportsystem oder Fahrzeug zugeordnet ist und/oder an einem Transportsystem oder Fahrzeug angeordnet ist.

14. Verfahren nach einem der Ansprüche 1 bis 13, **dadurch gekennzeichnet, dass** der mindestens eine Code (1) im Bereich einer Bewegungsstrecke eines Transportsystems oder Fahrzeugs angeordnet ist.

15. Vorrichtung zur optischen Erfassung mindestens eines Codes (1), insbesondere zur Durchführung des Verfahrens nach einem der Ansprüche 1 bis 14, umfassend einen optischen Sensor (2) sowie einen Decoder (4), wobei der mindestens eine Code (1) mittels des optischen Sensors (2) zur Erzeugung eines entsprechenden Detektionssignals (3) zumindest teilweise erfassbar ist und wobei das Detektionssignal (3) zur Auswertung des mindestens einen Codes (1) dem Decoder (4) zuführbar ist, **dadurch gekennzeichnet, dass** eine Bewertung einer Qualität einer Auswertung des mindestens einen Codes (1) anhand mindestens eines im Decoder (4) bereitgestellten Parameterwerts (5) durchführbar ist.
